(19) Europäisches Patentamt
European Patent Office
Office européen des brevets

(11) **EP 2 286 653 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(51) Int Cl.:
*A01D 34/00* (2006.01)          *G06T 7/00* (2006.01)
*G05D 1/02* (2006.01)

(21) Anmeldenummer: **10167338.2**

(22) Anmeldetag: **25.06.2010**

(54) **Autonome mobile Plattform zur Oberflächenbearbeitung**

Autonomous mobile platform for surface processing

Plateforme mobile autonome destinée au traitement de surface

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **17.08.2009 DE 102009028598**

(43) Veröffentlichungstag der Anmeldung:
**23.02.2011 Patentblatt 2011/08**

(73) Patentinhaber: **Robert Bosch GmbH
70442 Stuttgart (DE)**

(72) Erfinder:
• **Benzler, Ulrich-Lorenz
30855, Langenhagen (DE)**
• **Biber, Peter
72070, Tuebingen (DE)**
• **Svensson, Anke
38100, Braunschweig (DE)**

(56) Entgegenhaltungen:
**EP-A1- 1 529 428      EP-A1- 1 704 766
US-B1- 6 686 951**

## Beschreibung

Stand der Technik

Die vorliegende Erfindung betrifft eine autonome mobile Plattform zur Oberflächenbearbeitung, insbesondere Rasenflächenbearbeitung, mit einem selbststeuernden Fahrzeug nach dem Oberbegriff des Hauptanspruchs. Ferner betrifft die vorliegende Erfindung ein Verfahren zur Oberflächenbearbeitung, insbesondere Rasenflächenbearbeitung.

Sogenannte selbststeuernde Einheiten, etwa als autonome Rasenmäher (ARM) ausgebildet, sind aus dem Stand der Technik allgemein bekannt, wobei eine wesentliche technische Herausforderung bei der Selbststeuerung einer derartigen Vorrichtung darin liegt, dass das System zuverlässig eine Abgrenzung auf der Bearbeitungsfläche (also insbesondere Rasenfläche) zwischen einem konkret zu bearbeitenden Bereich (also Nutzbereich innerhalb der Abgrenzung) und einem nicht zu bearbeitenden Bereich (Nicht-Nutzbereich) erkennt und die Bearbeitung (sowie weitestmöglich die Bewegung) auf den Nutzbereich konzentriert.

Aufgrund der vielfältigen Umgebungs- und Einsatzbedingungen, etwa verschiedenen Möglichkeiten der Anlage und Abgrenzung einer Rasenfläche von umgebenen Beeten, Wegen od.dgl., ist die Zuverlässigkeit von aus dem Stand der Technik bekannten Erfassungsmitteln eines solchen selbststeuernden Fahrzeugs zur Unterscheidung zwischen Nutzbereich und Nicht-Nutzbereich entweder sehr aufwändig oder aber stark fehleranfällig. So ist es aus dem Stand der Technik beispielsweise bekannt, konkret die Abgrenzung in Form eines sogenannten Führungsdrahts (Einfassungsdrahts) zu markieren, wobei das selbststeuernde Fahrzeug dann sich weitgehend frei, entweder stochastisch oder auf der Basis vorgegebener Algorithmen, innerhalb des durch den Einfassungsdraht markierten Gebiets bewegen kann und das Detektieren des Einfassungsdrahts dann für das Fahrzeug ein Richtungsänderungssignal erzeugt. Dies ist jedoch, nicht zuletzt aufgrund der Notwendigkeit für einen Einfassungsdraht, aufwändig, und, insbesondere bei stochastischem Steuerungs- und Fahrverhalten innerhalb der abgrenzten Fläche, ineffizient.

Aus dem Stand der Technik ist es daher ferner bekannt, ein selbststeuerndes Fahrzeug in Form eines ARM mit einem optisch wirksamen Graserkennungssensor zu versehen. Ein derartiger, etwa auf einen in Fahrtrichtung des Fahrzeugs vor dem Fahrzeug gelegenen Bereich der Grasfläche gerichteter Sensor basiert auf der Auswertung der spektralen Eigenschaften des Tageslicht bzw. der Sonne des am Rasen reflektierten Lichts, welches durch Photodioden gemessen wird. Auf der Basis dieses Sensorsignals kann dann eine Feststellung erfolgen, ob der nachfolgend zu bearbeitende (d.h. vor dem Fahrzeug liegende) Flächenbereich ein etwa zu mähender Nutzbereich ist (da hier Gras detektiert wurde), oder aber ob hier ein Nicht-Nutzbereich vorliegt, mit der Folge, dass das Fahrzeug eine Bewegungsänderung durchzuführen hat. Ein Beispiel wird durch EP 1704766 A offenbart.

Allerdings ist auch eine derartige, als bekannt vorausgesetzte (und i.w. punktuell wirksame) Sensorik potentiell problematisch, denn insbesondere die Punktwirkung eines bekannten Grassensors führt häufig zu Fehlschlüssen im Hinblick auf den tatsächlichen Charakter der anstehenden Oberfläche: So würde etwa ein (als Nicht-Nutzbereich klassifiziertes) schmales Grasbüschel zwischen Wegplatten als Rasen (und damit Nutzbereich) erfasst werden, mit dem Ergebnis, dass das Fahrzeug hier in unerwünschter Weise einen Mähbetrieb vornimmt. Auch würde etwa ein brauner Erdfleck innerhalb einer zu mähenden Rasenfläche potentiell als Nicht-Nutzbereich klassifiziert werden, mit einem unerwünschten Ergebnis, dass dann das Fahrzeug diesen Bereich umfährt.

Nicht zuletzt Sicherheitserfordernisse verlangen, dass im Zweifelsfall, d.h. bei nicht völlig eindeutiger Feststellung eines Rasensignals, kein Bearbeitungsbetrieb (Mähbetrieb) stattfindet, so dass die als bekannt vorausgesetzte Sensorsteuerung in einem realen Anwendungsszenario häufig zu unbefriedigenden Mähergebnissen führt.

Offenbarung der Erfindung

Aufgabe der vorliegenden Erfindung ist es daher, eine autonome mobile Plattform zur Oberflächenbearbeitung, insbesondere Rasenflächenbearbeitung, mit Hilfe eines selbststeuernden Fahrzeuges im Hinblick auf ihre Betriebseigenschaften, insbesondere ihre Eigenschaften in der Unterscheidung zwischen einem Nutzbereich (Bearbeitungs- bzw. Rasenfläche) und einem Nicht-Nutzbereich (Bereich außerhalb des Bearbeitungsbereichs bzw. der Rasenfläche) zu verbessern und somit die Bearbeitungsqualität der Vorrichtung zu erhöhen.

Die Aufgabe wird durch die Vorrichtung mit den Merkmalen des Hauptanspruchs sowie das Verfahren mit den Merkmalen des unabhängigen Patentanspruchs 7 gelöst; vorteilhafte Weiterbildungen der Erfindung sind in den Unteransprüchen beschrieben.

In erfindungsgemäß vorteilhafter Weise sind die Erfassungsmittel einerseits mit einer elektronischen Bildaufnahmeeinheit versehen, welche in Form eines eine Mehrzahl elektronischer Pixel aufweisenden Kamerabildes einen Bilderfassungsbereich als Ausschnitt der Bearbeitungsfläche (Rasenfläche) abbildet, wobei sich mit Bewegung des Fahrzeugs entsprechend auch der Bilderfassungsbereich ändert.

Erfindungsgemäß zusätzlich weisen die Erfassungsmittel andererseits einen Oberflächensensor (bevorzugt: Grassensor) auf, welcher auf einen Teilabschnitt des Bilderfassungsbereichs gerichtet ist oder (z.B. mit zeitlichem Abstand) eine Beziehung zu einem solchen Teilabschnitt herstellt und damit in der Lage ist, entsprechend seinem Sensorerfassungsbereich (welcher dann mindestens einem Einzelpixel des Bildes der Bildaufnahmeeinheit entspricht) die Unterscheidung vorzunehmen, ob das entsprechende Pixel der Bearbeitungsoberfläche (Rasenfläche) entspricht oder aber einer (mindestens eine) Nicht-Bearbeitungsoberfläche (Nicht-Rasenfläche) entspricht.

Durch die weiter erfindungsgemäßen Klassifizierungsmittel ist es nunmehr möglich, großflächiger und zur Vermeidung der selektiven (und damit fehleranfälligen) Feststellung eines Einzelsensors gesamthaft das Mehrpixel-Kamerabild der Bildaufnahmeeinheit zu klassifizieren, und zwar wird erfindungsgemäß und ausgehend von dem mittels des Oberflächensensors (Grassensors) klassifizierten (mindestens einen) Einzelpixel entsprechend einer Wahrscheinlichkeit (rechnerisch bzw. numerisch angewendet) eine entsprechende Zuordnung bzw. Klassifikation der benachbarten Pixel der Bildaufnahmeeinheit vorgenommen, mit dem Ergebnis, dass das Kamerasignal der Bildaufnahmeeinheit als Menge klassifizierter Bildpixel vorliegt, welche, in der Art einer Karte, die Abgrenzung dadurch abbilden, dass die Abgrenzung den Übergang zwischen klassifizierten Pixeln zur Bearbeitungsoberfläche (d.h. innerhalb der Abgrenzung) und klassifizierten Pixeln als Nicht-Bearbeitungsoberfläche (außerhalb der Abgrenzung) darstellt.

Durch die Anwendung der Wahrscheinlichkeitsverteilung über eine Mehrzahl von Pixeln entsteht damit eine großflächige Zuordnung, welche insbesondere in der Lage ist, selektive Einzelfehler als solche zu erkennen und damit auszugleichen; mithin wird die Erfassungsgüte und damit auch die Bearbeitungsgüte der Vorrichtung im Hinblick auf ein korrektes Erfassen der Nutzfläche (Bearbeitungsoberfläche) signifikant verbessert.

In besonders geeigneter Weise gemäß einer Weiterbildung der Erfindung ist dabei die Anwendung der Wahrscheinlichkeit bzw. der Wahrscheinlichkeitsverteilung nicht statisch, vielmehr erfolgt auf der Basis der (kontinuierlich erzeugten) Signale des Oberflächensensors (Grassensors) eine permanente Korrektur, denn die Grassensorsignale legen kontinuierliche Ist-Werte vor, mit welchen sich in ansonsten bekannter Weise die Wahrscheinlichkeitsverteilung anpassen lässt.

Gemäß bevorzugter Weiterbildungen wird dann auf der Basis der klassifizierten Einzelpixelsignale bzw. der daraus ermittelten Karte mindestens ein Bewegungssteuerungssignal (Bewegungsanweisung) für das Fahrzeug erzeugt, welches dann, in Form geeigneter elektronischer Treibersignale, die Steuer- und/oder Bewegungsaggregate des Fahrzeugs antreibt und in die gewünschte Richtung bewegt. Ergänzend und weiterbildungsgemäß ist zudem vorgesehen, als Reaktion auf die erfindungsgemäß erzeugten Positionsdaten die Arbeits- und/oder Funktionseinheit selektiv zu aktivieren bzw. zu deaktivieren, so dass etwa beim Überfahren eines Nicht-Nutzbereichs das Mähwerk abgeschaltet und/oder eine Düngerstreuung verhindert wird.

Im Ergebnis entsteht durch die vorliegende Erfindung in überraschend wirksamer Weise eine autonome mobile Plattform, welche -- nicht beschränkt lediglich auf Rasenmäher -- sehr zuverlässig und in der beschriebenen Weise eine Flächenunterscheidung vornehmen kann, so dass die Bearbeitungsqualität der Fläche innerhalb der Abgrenzung und die Genauigkeit der Beachtung der Abgrenzung signifikant erhöht wird.

Weitere Vorteile, Merkmale und Einzelheiten ergeben sich aus der nachfolgenden Beschreibung bevorzugter Ausführungsbeispiele sowie anhand der Zeichnungen; diese zeigen in:

Fig. 1    eine schematische Seitenansicht der konstruktiven Realisierung der autonomen mobilen Plattform zur Rasenflächenbearbeitung gemäß einer ersten Ausführungsform der Erfindung,

Fig. 2    ein Blockschaltbild zur Verdeutlichung wesentlicher Funktionskomponenten der Vorrichtung gemäß Fig. 1 und deren Zusammenwirken,

Fig. 3    eine Frontansicht der Vorrichtung gemäß Fig. 1,

Fig. 4    eine Prinzipdarstellung zur Verdeutlichung der Bearbeitungsoberfläche sowie einer darin verlaufenden Abgrenzung,

Fig. 5    ein Flussablaufdiagramm zum Verdeutlichen wesentlicher Verfahrens- schritte zum Betreiben der Vorrichtung gemäß Fig. 1 bis 4,

Fig. 6    eine Prinzipdarstellung zum Verdeutlichen einer Umsetzung der Wahr- scheinlichkeitsermittlung für eine Mehrzahl von Einzelpunkten (Einzel- pixel) in Gitterform und

Fig. 7    eine Schemaansicht einer autonomen mobilen Plattform einer zweiten Ausführungsform der Erfindung.

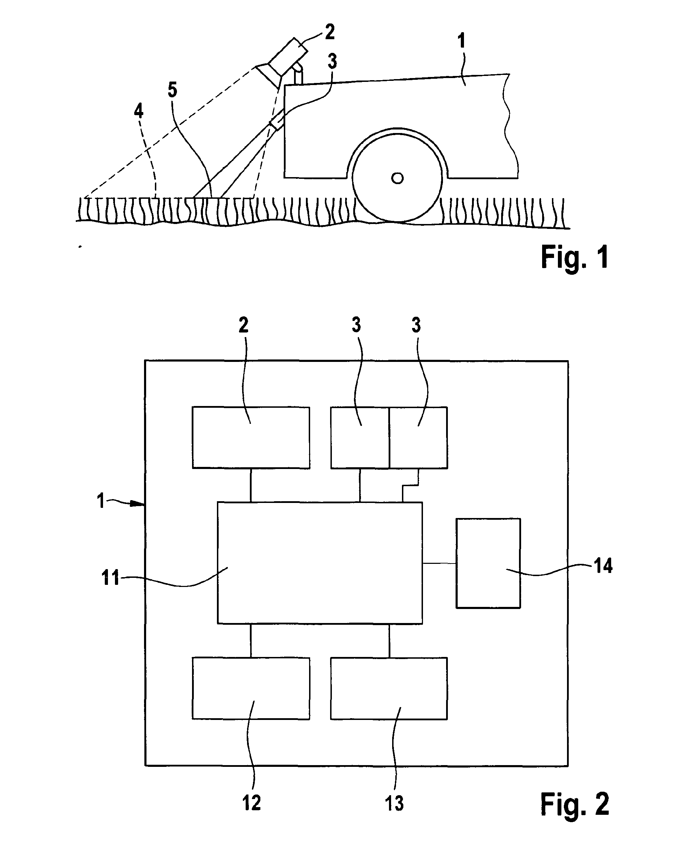

Die Fig. 1 zeigt die autonome mobile Plattform zur Oberflächenbearbeitung gemäß einem ersten bevorzugten Ausführungsbeispiel.

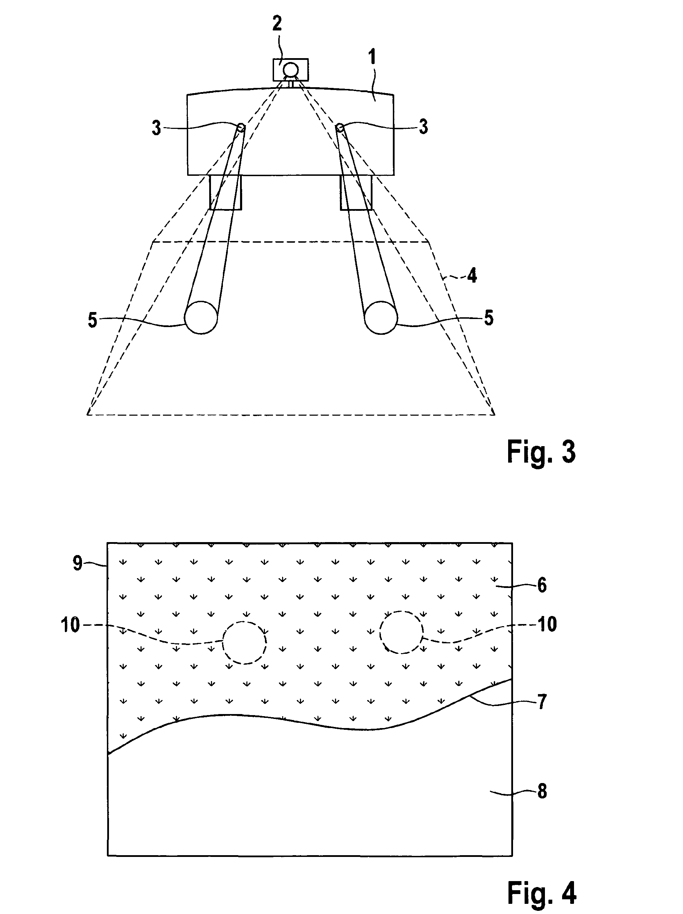

Die Fig. 1 verdeutlicht schematisch und in einer Seitenansicht dieses einen autonomen Rasenmäher (ARM) realisierende Ausführungsbeispiel; die Fig. 3 zeigt die Anordnung in der Frontansicht. Eine Kamera 2 zur digitalen Bilderfassung sowie ein Paar von Rasensensoren 3 zur Detektion auf der Basis spektraler Lichtreflexion sind in der in den Fig. gezeigten Weise frontseitig an bzw. auf einem Fahrzeugchassis 1 befestigt. Dabei stellt das Bezugszeichen 4 den Bilderfassungsbereich der Kamera 2 dar, wobei die jeweiligen, durch die Rasensensoren 3 auf die Fläche projizierten Messflecken durch das Bezugszeichen 5 markiert sind. Es wird deutlich, dass beide Messflecken einen Ausschnitt aus dem Bilderfassungsbereich beleuchten (und entsprechend sensorisch erfassen), so dass aus der Mehrzahl der dem Bilderfassungsbereich der Kamera 2 abbildenden Pixel die Rasensensoren 3 Einzelpixel bzw. eine kleine Gruppe von Pixeln entsprechend den Flecken 5 abdecken.

Die Fig. 2 zeigt im Blockschaltbild die wesentlichen Funktionskomponenten der Realisierung der Vorrichtung gemäß Fig. 1, 3. Eine zentrale Verarbeitungseinheit 11, typischerweise realisiert mittels eines geeignet programmierten Mikrocomputers oder Mikrocontrollers empfängt die Bild- bzw. Sensorsignale der Einheiten 2, 3 und nimmt die nachfolgend zu beschreibende Klassifikation samt Datenaufbereitung vor. Dabei wird die nachfolgend anhand der Verfahrensschritte zu beschreibende Funktionalität insbesondere der mittels der Verarbeitungseinheit 11 realisierten Klassifikationsmittel (Klassifizierungsmittel) typischerweise in Form geeignet programmierter Software-Routinen realisiert, technisch möglich ist gleichermaßen eine Hardware-Umsetzung. Die zentrale Verarbeitungseinheit 11 steuert dann eine z.B. als Mähwerk für den Rasen eingerichtete Arbeits- bzw. Funktionseinheit 12 sowie einen Motorantrieb 13 (samt geeignet eingerichteter Lenkung) an. Bedienereingriff, z.B. zur Programmierung oder für einen Lernmodus, erfolgt mittels einer lediglich schematisch in Fig. 2 gezeigten Benutzerschnittstelle 14.

Während des Betriebs des ARM werden die Messdaten der Rasensensoren und der Kamera zusammengeführt (fusioniert). Ziel der Fusion ist eine Klassifizierung der Umgebung des ARM in Rasen- und in Nicht-Rasenflächen.

Es gilt jeden Pixel des Kamerabildes als Rasen oder Nicht-Rasen zu klassifizieren. Dieses Problem wird in zwei Schritten adressiert. Zunächst wird eine Wahrscheinlichkeitsverteilung der Pixelfarbwerte für die beiden Klassen "Rasen" und "Nicht-Rasen" festgelegt. Diese Verteilung wird im Folgenden als $p_r = p(z_i^c \mid x_i)$, wobei $x_i \in \{\text{Rasen} \mid \text{Nicht-Rasen}\}$ und $z_i^c$ den Farbwert der Kamera an Pixel i liefert, bezeichnet (die Pixel seien durchnummeriert, der Farbwert kann z.B. ein RGB-Wert sein). Diese Verteilung wird beim Start des ARM-Betriebs mittels einer aus empirischen oder historischen Daten bestimmten Verteilung initialisiert. Während des Betriebs des ARM bestimmen die Rasensensoren, ob ihr Messfleck auf Rasen zeigt oder nicht. Diese Information kann diskret oder in Form einer Wahrscheinlichkeit vorliegen. Da die Position der Sensoren bekannt ist, lässt sich unter Annahme einer geraden Fläche vor dem ARM eine geometrische Abbildung des Rasensensorflecks in das Bild bestimmen. Dabei ist es vorteilhaft, wenn ein Rasensensor möglichst nahe der Kamera montiert ist, da der Abbildungsfehler bei Verletzung der Annahme dann klein ist. Nun werden die Farbwerte der Pixel, die der Projektion des Rasensensorflecks entsprechen, benutzt, um die Wahrscheinlichkeitsverteilung $p_r$ anzupassen. Auf diese Weise passt sich der Fusionsalgorithmus an wechselnde Umgebungsverhältnisse an (z.B. Lichtverhältnisse).

Im nächsten Schritt wird unter Verwendung der angepassten Wahrscheinlichkeitsverteilung für jede Pixel die Wahrscheinlichkeiten $p(x_i \mid z_i^c)$ bestimmt, also die Wahrscheinlichkeit, dass Pixel i einem Rasenpixel entspricht, bei gegebenem Messwert $z_i^c$. Dann wird unter der Annahme, dass benachbarte Pixel meistens die gleiche korrekte Klassifizierung haben, jeder Pixel in einer der beiden Klassen "Rasen" und "Nicht-Rasen" eingeordnet. Das Ergebnis ist also ein Binärbild, in welchem jeder Pixel für eine der beiden Klassen "Rasen" oder "Nicht-Rasen" steht. Durch bekannte Algorithmen lassen sich nun in dem klassifizierten Binärbild zusammenhängende Regionen segmentieren oder die Grenzverläufe zwischen den Regionen extrahieren sowie kleine Nicht-Rasenflächen aufgrund der Regiongröße erkennen, wie sie z.B. von totem Laub oder Wegplatten erzeugt werden.

Dies zeigt Fig. 4 beispielhaft: Im Kamerabild 9 sind projizierte Messflächen zweier Rasensensoren 10 sichtbar. In diesem Beispiel gibt es eine Rasenregion 6, die durch einen Grenzverlauf 7 von einer Nicht-Rasenregion 8 getrennt ist.

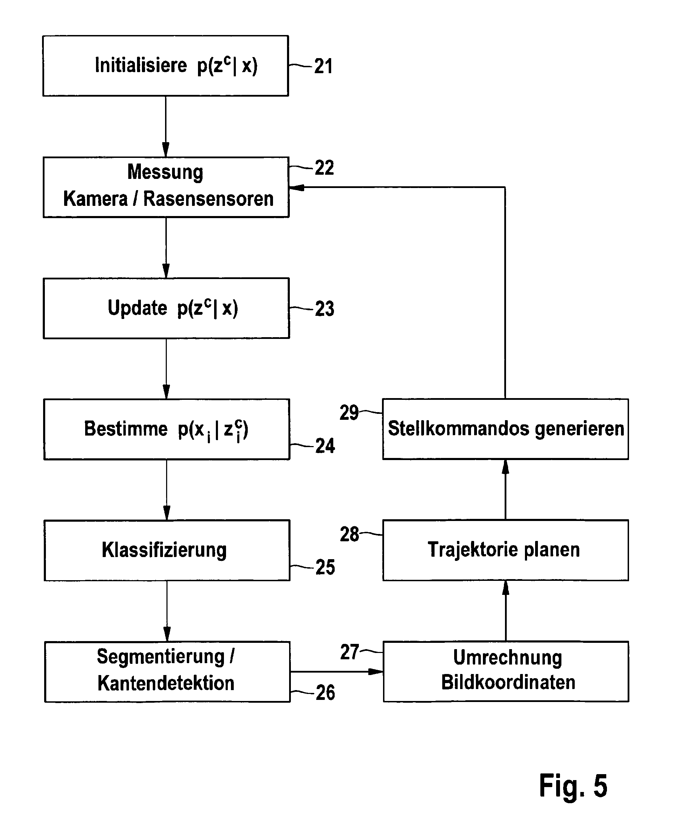

Fig. 5 fasst das Vorgehen als Ablauf (Verfahren) zusammen:

In Schritt 21 wird $p(z^c \mid x)$ initialisiert, die Wahrscheinlichkeitsverteilung kann dabei z.B. durch Histogramm gegeben sein, dem Fachmann sind hier aber auch andere Möglichkeiten offensichtlich, z.B. die Repräsentation durch eine Normalverteilung, durch einen sog. Mixture of Gaussians, durch ein neuronales Netz, etc.

In Schritt 22 werden Messungen des Kamerabildes und der Rasensensoren vorgenommen. Der ARM befindet sich dabei schon in Betrieb.

In Schritt 23 wird die Wahrscheinlichkeitsverteilung $p(z^c \mid x)$ anhand aktueller Messungen angepasst (das Messmodel). Dabei werden die den Messflecken der Rasensensoren entsprechenden Pixel mit ihrer Klassifizierung als Trainingsbeispiele verwendet. Die Anpassung kann im einfachsten Fall durch gewichtete Mittelung vonstatten gehen. Es sind hier auch andere Verfahren bekannt, z.B. aus dem Bereich des Reinforcement-Leaning, und die Wahl der Methode hängt hier auch von der Repräsentation des Messmodells ab. Von besonderem Vorteil ist es, wenn die Anpassung des Messmodells verschiedene Zeitskalen in Betracht zieht, wie in Biber, Peter and Duckett, Tom "Dynamic Maps for Long-Term Operation of Mobile Service Robots", In: Robotics: Science and Systems, 2005, beschrieben. Damit ist es möglich, sich an Änderungen der Umgebung, die mit unterschiedlicher Geschwindigkeit ablaufen, adäquat anzupassen. Ein Beispiel hierfür ist die langsame Änderung der Umgebungsbeleuchtung mit dem Lauf der Sonne im Gegensatz zu einer schnellen Änderung, die beim Eintreten des ARM in einen schattigen Bereich des Gartens auftritt.

In Schritt 24 wird $p_r = p(x_i \mid z_i^c)$ unter Verwendung des Messmodells und Anwendung der Bayes-Formel p(x | z) ~ p(z | x)* p(x) bestimmt. Die Wahrscheinlichkeiten p(x) können dabei aus dem zeitlichen Fortschreiten der Ergebnisse des letzten Schrittes unter Berücksichtigung der ARM-Bewegung bestimmt oder mit konstanten Werten besetzt werden.

In Schritt 25 wird die Klassifizierung der Bildpixel durchgeführt. Dabei wird neben dem Messmodell berücksichtigt, dass benachbarte Pixel mit hoher Wahrscheinlichkeit dieselbe Klassifizierung besitzen. Dies wird durch Wahrscheinlichkeiten $p(x_i \mid x_j)$ modelliert, für den Fall, dass i und j benachbarte Pixel sind (Schreibweise (i, j) ∈ N).

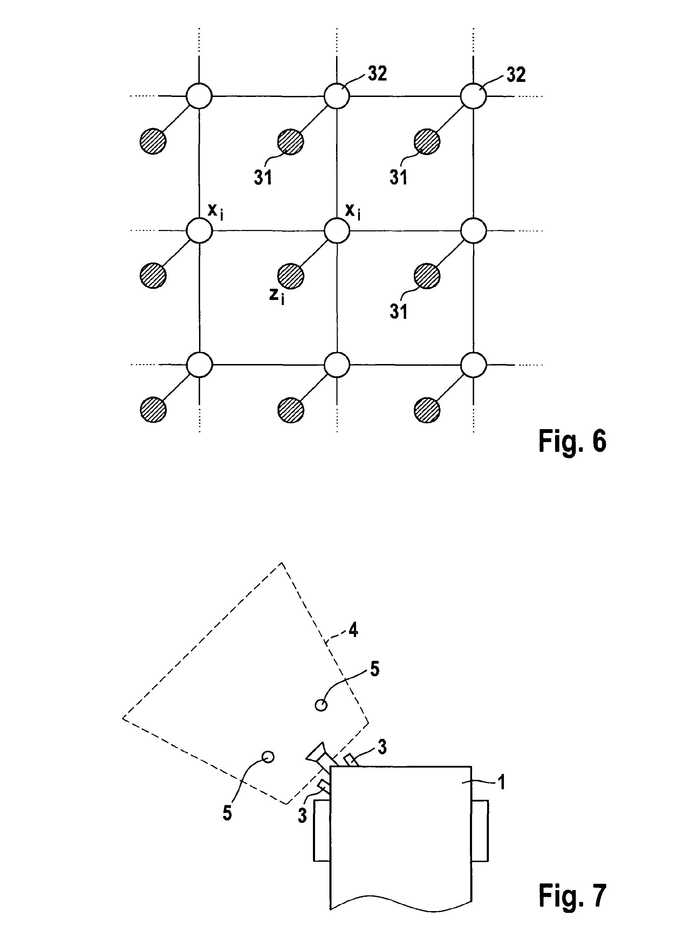

Dieses Problem wird hier durch ein Markov-Random-Field (MRF) modelliert, wie in Fig. 6 gezeigt. Jeder Messwert $z_i$ entspricht einer gemessenen Zufallsvariable 31. Jeder Pixel $x_i$ des klassifizierten Binärbilds entspricht einer verborgenen Zufallsvariable 32. Eine Konfiguration K entspricht einer Belegung jedes Pixel $x_i$ mit dem Wert "Rasen" oder "Nicht-Rasen". Die Wahrscheinlichkeit einer solchen Konfiguration ist durch

$$p(K) = \prod p(z_i \mid x_i), \prod_{(i,\,j) \in N} p(x_i \mid x_j)$$

gegeben. Das gewünschte Ergebnis ist die Konfiguration mit der größten Wahrscheinlichkeit. In der Praxis wird dabei die Funktion E(K)=-log(p(K)) minimiert. Für dieses Problem lassen sich sehr gute Ergebnisse mit effizienten Methoden bestimmen, wie z.B. in "Efficient Belief Propagation for Early Vision" , Pedro f. Felzenszwalb und Daniel P. Huttenlocher, in: International Journal of Computer Vision, Vol. 70, No. 1, October 2006 beschrieben.

Im Schritt 26 wird das Binärbild in Regionen gleicher Pixel unterteilt und es werden Grenzverläufe extrahiert. Die sind Standardbildverarbeitungsprobleme, für die es eine Vielzahl bekannter Methoden gibt (s. z.B. Bernd Jähne, Digitale Bildverarbeitung. 6. Auflage, Springer Berlin, 2005).

Im Schritt 27 werden die Koordinaten der extrahierten Regionen und Grenzverläufe in ein Umgebungskoordinatensystem für den ARM umgerechnet. Dabei wird wieder die bekannte Geometrie der Sensorkonfiguration und der Kameraparameter sowie die Annahme einer ebenen Fläche verwendet.

In Schritt 28 werden die Informationen aus Schritt 27 zur Berechnung von Bewegungsanweisungen verwendet. Ist z.B. ein Grenzverlauf vor dem ARM, so wird dieser so genau wie möglich so angefahren, dass bis zur Rasengrenze gemäht wird. Ist z.B. ein Grenzverlauf neben dem ARM und ist der gegenwärtige Auftrag des ARM, den Rand abzufahren, so wird eine Trajektorie generiert, die möglichst genau an der Rasengrenze entlang mäht.

In Schritt 29 werden schließlich Ansteuerungskommandos für den Antrieb generiert, die dann die entsprechenden Stellbefehle an die Motorsteuerung gibt.

Es beginnt dann die nächste Iteration bei Schritt 22.

Die vorliegende Erfindung ist nicht auf das beschriebene Ausführungsbeispiel beschränkt. So ist das Vorsehen und die Ausgestaltung der Kamera- und Rasensensorik gemäß der Fig. 1 bis 5 lediglich exemplarisch, ebenso ist die Zahl der Rasensensoren und Ausrichtung der Kamera exemplarisch, wobei es gemäß der Erfindung vorgesehen ist, dass sich der Messfleck (d.h. der Sensorerfassungsbereich) zumindest teilweise innerhalb des Kamera-Erfassungsbereichs (Bilderfassungsbereich) befindet.

Zur Realisierung der Kamera sind zahlreiche Varianten möglich, etwa eine Realisierung mittels einer perspektivischen Kamera (einer sogenannten Omnicam), Weitwinkel- bzw. Extrem-Weitwinkel- (Fisheye)-Objektiven usw. Auch ist der Farbraum geeignet einzuschränken bw. einzustellen.

Die vorliegende Erfindung ist auch nicht auf die Rasenunterscheidung zur Rasenflächenbearbeitung beschränkt. Vielmehr bietet es sich etwa an, die Erfindung für andere Bearbeitungsoberflächen zu benutzen, etwa im Garten- oder Grünbereich (z.B. zur Unterscheidung zwischen Nutzpflanzen und Unkraut, für Ernten od.dgl.), alternativ auch zur Realisierung von industriellen- oder Haushalts-Anwendungen, wie etwa von automatisierten autonomen Reinigungsgeräten.

**Patentansprüche**

1. Autonome mobile Plattform zur Oberflächenbearbeitung, insbesondere Rasenflächenbearbeitung, mit
   einem selbststeuernden Fahrzeug (1), das zum autonomen Fortbewegen auf einer eine Abgrenzung (7) aufweisenden Bearbeitungsfläche (6) und als Träger für eine Arbeits- und/oder Funktionseinheit (12) zur Bearbeitung der Bearbeitungsfläche ausgebildet ist,
   wobei das Fahrzeug Erfassungsmittel (2, 3) zur Oberflächenerfassung sowie zur Unterscheidung von einer Nicht-Bearbeitungsoberfläche (8) außerhalb der Abgrenzung (7) aufweist,
   **dadurch gekennzeichnet,**
   **dass** die Erfassungsmittel eine eine Mehrzahl von Einzelpixeln aufweisende elektronische Bildaufnahmeeinheit (2) aufweisen, die auf einen Bilderfassungsbereich (9) in der Bearbeitungsfläche (6) und/ oder in der Nicht-Bearbeitungsfläche (8) gerichtet ist,
   die Erfassungsmittel einen Oberflächensensor (3) aufweisen, der so eingerichtet ist, dass sein Sensorerfassungsbereich in einer Beziehung zum Bilderfassungsbereich steht, bevorzugt auf den Bilderfassungsbereich (9), weiter bevorzugt einen Teilbereich (10) des Bilderfassungsbereichs, gerichtet ist und mit dem Bild mindestens eines Einzelpixels der Bilderfassungseinheit verknüpft ist, insbesondere überlappt und die Erfassungsmittel Klassifizierungsmittel (11) aufweisen, die so mit der Bildaufnahmeeinheit und dem Oberflächensensor zusammenwirken, dass auf der Basis eines Unterscheidungssignals des Oberflächensensors eine Mehrzahl von Einzelpixeln der Erfassungsmittel zum Erzeugen einer einer die Abgrenzung (7) abbildenden Karte entsprechenden elektronischen Datenmenge der Einzelpixelsignale in Positionsdaten der Bearbeitungsfläche sowie in Positionsdaten der Nicht-Bearbeitungsfläche klassifiziert werden.

2. Plattform nach Anspruch 1,
   **dadurch gekennzeichnet,**
   **dass** der Oberflächensensor mindestens ein Grassensor (3) ist und die Arbeits- und/oder Funktionseinheit (12) eine Mäh- oder Düngevorrichtung aufweist.

3. Plattform nach Anspruch 1 oder 2,
   **dadurch gekennzeichnet,**
   **dass** die Klassifizierungsmittel Mittel zur Ermittlung einer Wahrscheinlichkeit oder Wahrscheinlichkeitsverteilung aufweisen, die eine Klassifizierungswahrscheinlichkeit für einen dem Sensorerfassungsbereich (10) benachbarten Bereich des Bilderfassungsbereichs (9) sowie zugehöriger der Einzelpixel angeben.

4. Plattform nach Anspruch 3,
   **dadurch gekennzeichnet,**
   **dass** die Mittel zur Ermittlung der Wahrscheinlichkeit so ausgebildet sind, dass sie als Reaktion auf das Unterscheidungssignal eine Änderung und/oder Anpassung der Wahrscheinlichkeit bzw. Wahrscheinlichkeitsverteilung vornehmen.

5. Plattform nach einem der Ansprüche 1 bis 4,
   **dadurch gekennzeichnet,**
   **dass** die elektronischen Einzelpixelsignale als Binärbild vorliegen und/oder in ein Binärbild klassifiziert werden.

6. Plattform nach einem der Ansprüche 1 bis 5,
   **gekennzeichnet durch** den Erfassungsmitteln nachgeschaltete Mittel zur Erzeugung einer Bewegungsanweisung für das Fahrzeug, die insbesondere eine von der Karte abhängige Richtungs- und/oder Steueranweisung aufweist.

7. Verfahren zur Oberflächenbearbeitung, insbesondere Rasenflächenbearbeitung, mit einem selbststeuernden Fahrzeug (1), das zur Bewegung auf einer eine Abgrenzung (7) aufweisenden Bearbeitungsfläche Bewegungsanweisungen mittels einen Sensor (2, 3) aufweisenden Erfassungsmitteln generiert und zur Bewegung innerhalb der Abgrenzung ausführt, **gekennzeichnet durch** die Schritte:

   - elektronisches Erfassen eines Bildes der Bearbeitungsfläche in einem Erfassungsbereich (9) der Erfassungsmittel mit einer Mehrzahl von Einzelpixeln,
   - Erzeugen eines Detektionssignals zur Klassifizierung mindestens eines der Einzelpixel als zugehörig zu der Bearbeitungsfläche (6) innerhalb der Abgrenzung (7) oder als zugehörig zu der Nicht-Bearbeitungsfläche außerhalb der Abgrenzung, wobei das Erzeugen des Detektionssignals **durch** Teilbilderfassung innerhalb des Erfassungsbereichs erfolgt,
   - Ermittlung einer Zugehörigkeitswahrscheinlichkeit der Mehrzahl der Einzelpixel zu der Bearbeitungsfläche innerhalb der Abgrenzung oder zu der Nicht-Bearbeitungsfläche außerhalb der Abgrenzung als Reaktion auf ein Wahrscheinlichkeitssignal und/oder ein Wahrscheinlichkeitsverteilungssignal,
   - Anpassen des Wahrscheinlichkeitssignals und/oder des Wahrscheinlichkeitsverteilungssignals als Reaktion auf ein erzeugtes Detektionssignal,
   - Klassifizieren der Mehrzahl der Einzelpixel als zugehörig zu der Bearbeitungsfläche innerhalb der Abgrenzung bzw. als zugehörig zu der Nicht-Bearbeitungsfläche außerhalb der Abgrenzung
   - und Ermitteln einer Positionsdaten der Abgrenzung aufweisenden Karte aus den klassifizierten Einzelpixeln.

8. Verfahren nach Anspruch 7,
   **gekennzeichnet durch** das Erzeugen der Bewegungsanweisungen aus den Positionsdaten und/oder aus den klassifizierten Einzelpixeln.

9. Verfahren nach Anspruch 7 oder 8,
   **gekennzeichnet durch** das Ansteuern eines Antriebs des Fahrzeugs mit den Bewegungsanweisungen.

10. Verfahren nach einem der Ansprüche 7 bis 9,
    **dadurch gekennzeichnet,**
    **dass** das Verfahren ein Verfahren zum autonomen Navigieren des ein Mäh- und/oder Düngeaggregat tragenden Fahrzeugs innerhalb der Abgrenzung auf einer Rasenfläche als Bearbeitungsfläche ist.

## Claims

1. Autonomous mobile platform for surface processing, in particular lawn processing, having a self-controlling vehicle (1) which is designed to autonomously move along on a processing surface (6) having a boundary (7) and is in the form of a support for a working and/or functional unit (12) for processing the processing surface,
the vehicle having capture means (2, 3) for capturing the surface and for distinguishing the surface from a non-processing surface (8) outside the boundary (7),
**characterized in that**
the capture means have an electronic image recording unit (2) which has a plurality of individual pixels and is directed to an image capture region (9) in the processing surface (6) and/or in the non-processing surface (8),
the capture means have a surface sensor (3) which is set up in such a manner that its sensor capture region is related to the image capture region, is preferably directed to the image capture region (9), more preferably a section (10) of the image capture region, and is linked to the image of at least one individual pixel of the image capture unit, in particular overlaps said image,
and the capture means have classification means (11) which interact with the image recording unit and the surface sensor in such a manner that, on the basis of a distinguishing signal from the surface sensor, a plurality of individual pixels of the capture means are classified as position data relating to the processing surface and as position data relating to the non-processing surface in order to produce an electronic data volume corresponding to a map which depicts the boundary (7).

2. Platform according to Claim 1,
**characterized in that**
the surface sensor is at least one grass sensor (3) and the working and/or functional unit (12) has a mowing device or a fertilizer application device.

3. Platform according to Claim 1 or 2,
**characterized in that**
the classification means have means for determining a probability or probability distribution, which means indicate a classification probability for a region of the image capture region (9) adjacent to the sensor capture region (10) and associated individual pixels.

4. Platform according to Claim 3,
**characterized in that**
the means for determining the probability are designed such that they change and/or adapt the probability or probability distribution in response to the distinguishing signal.

5. Platform according to one of Claims 1 to 4,
**characterized in that**
the electronic individual pixel signals are in the form of a binary image and/or are classified as a binary image.

6. Platform according to one of Claims 1 to 5,
**characterized by** means which are connected downstream of the capture means and are intended to generate a movement instruction for the vehicle, which instruction has, in particular, a direction and/or control instruction dependent on the map.

7. Surface processing method, in particular lawn processing method, using a self-controlling vehicle (1) which, in order to move on a processing surface having a boundary (7), generates movement instructions using capture means having a sensor (2, 3) and carries out said instructions in order to move inside the boundary, **characterized by** the steps of:

   - electronically capturing an image of the processing surface in a capture region (9) of the capture means with a plurality of individual pixels,
   - generating a detection signal for classifying at least one of the individual pixels as being associated with the processing surface (6) inside the boundary (7) or as being associated with the non-processing surface outside the boundary, the detection signal being generated by capturing a partial image inside the capture region,
   - determining a probability of the plurality of individual pixels being associated with the processing surface inside the boundary or being associated with the non-processing surface outside the boundary in response to a probability signal and/or a probability distribution signal,
   - adapting the probability signal and/or the probability distribution signal in response to a detection signal generated,
   - classifying the plurality of individual pixels as being associated with the processing surface inside the boundary or as being associated with the non-processing surface outside the boundary,
   - and determining a map from the classified individual pixels, which map has position data relating to the boundary.

8. Method according to Claim 7,
**characterized by** the generation of the movement instructions from the position data and/or from the classified individual pixels.

9. Method according to Claim 7 or 8,
**characterized by** the control of a drive of the vehicle using the movement instructions.

**10.** Method according to one of Claims 7 to 9, **characterized in that** the method is a method for autonomously navigating the vehicle having a mowing unit and/or a fertilizer application unit inside the boundary on a lawn as the processing surface.

## Revendications

**1.** Plateforme mobile autonome pour le traitement de surfaces, notamment le traitement de surfaces engazonnées, comprenant :

un véhicule autoguidé (1) qui est conçu pour se déplacer de manière autonome sur une surface à traiter (6) présentant des limites (7) et est conçu en tant que support d'une unité de travail et/ou fonctionnelle (12) destinée à traiter la surface à traiter,
dans lequel le véhicule comprend des moyens de détection (2, 3) destinés à distinguer une surface ne devant pas être traitée (8) à l'intérieur des limites (7),
**caractérisée en ce que**
les moyens de détection comprennent une unité d'acquisition d'image électronique (2) comprenant une pluralité de pixels individuels, laquelle unité est dirigée vers une région de détection d'image (9) sur la surface à traiter (6) et/ou sur la surface ne devant pas être traitée (8),
les moyens de détection comprennent un capteur de surface (3) qui est conçu de manière à ce que la région de détection de son capteur soit liée à la région de détection d'image, qu'elle soit dirigée vers la région de détection d'image (9), et mieux encore, vers une région partielle (10) de la région de détection d'image, et qu'elle soit liée à l'image d'au moins un pixel individuel de l'unité de détection d'image, et plus particulièrement, qu'elle s'y superpose,
et les moyens de détection comprennent des moyens de classification (11) qui coopèrent avec l'unité d'acquisition d'image et avec le capteur de surface de manière à ce que, sur la base d'un signal de discrimination du capteur de surface, une pluralité de pixels individuels des moyens de détection destinés à générer une quantité de données électroniques des signaux de pixels individuels correspondant à une carte formant l'image des limites (7) soient classés en des données de position de la surface à traiter ainsi qu'en des données de position de la surface ne devant pas être traitée.

**2.** Plateforme selon la revendication 1, **caractérisée en ce que** le capteur de surface est au moins un capteur de gazon (3) et **en ce que** l'unité de travail et/ou fonctionnelle (12) comprend un dispositif de tonte ou de fertilisation.

**3.** Plateforme selon la revendication 1 ou 2, **caractérisée en ce que** les moyens de classification comprennent des moyens destinés à déterminer une probabilité ou une distribution de probabilité qui délivrent une probabilité de classification pour une région voisine de la région de détection (10) du capteur de la région de détection d'image (9) ainsi que des pixels individuels correspondants.

**4.** Plateforme selon la revendication 3, **caractérisée en ce que** les moyens destinés à déterminer la probabilité sont conçus de manière à ce qu'ils effectuent en réaction au signal de discrimination une modification et/ou une adaptation de la probabilité ou de la distribution de probabilité.

**5.** Plateforme selon l'une quelconque des revendications 1 à 4, **caractérisée en ce que** les signaux électroniques de pixels individuels se présentent sous la forme d'une image binaire et/ou sont classés en une image binaire.

**6.** Plateforme selon l'une quelconque des revendications 1 à 5, **caractérisée par** des moyens connectés en aval des moyens de détection pour générer une instruction de déplacement du véhicule, qui comprend notamment une instruction de direction et/ou de commande dépendant de la carte.

**7.** Procédé de traitement de surfaces, et plus particulièrement, de traitement de surfaces engazonnées, comprenant un véhicule autoguidé (1) qui génère à l'aide de moyens de détection comportant un capteur (2, 3) des instructions de déplacement pour le déplacement sur une surface à traiter présentant des limites (7) et qui les exécute pour le déplacement à l'intérieur des limites, **caractérisé par** les étapes suivantes :

- la détection électronique d'une image de la surface à traiter dans une région de détection (9) des moyens de détection comprenant une pluralité de pixels individuels,
- la génération d'un signal de détection pour classer au moins un pixel individuel comme appartenant à la surface à traiter (6) à l'intérieur des limites (7) ou comme appartenant à la surface ne devant pas être traitée à l'extérieur des limites, la génération du signal de détection s'effectuant par détection d'images partielles à l'intérieur de la région de détection,
- la détermination d'une probabilité d'appartenance de la pluralité des pixels individuels à la surface à traiter à l'intérieur des limites ou à la surface ne devant pas être traitée à l'extérieur des limites en réaction à un signal de probabilité et/ou à un signal de distribution de probabilité,

- l'adaptation du signal de probabilité et/ou du signal de distribution de probabilité en réaction à un signal de détection généré,

- la classification de la pluralité des pixels individuels comme appartenant à la surface à traiter à l'intérieur des limites, ou comme appartenant à la surface ne devant pas être traitée à l'extérieur des limites,

- et la détermination d'une carte comprenant des données de position des limites à partir des pixels individuels classés.

8. Procédé selon la revendication 7, **caractérisé par** la génération d'instructions de déplacement à partir des données de position et/ou à partir des pixels individuels classés.

9. Procédé selon la revendication 7 ou 8, **caractérisé par** le fait de commander un moyen d'entraînement du véhicule à l'aide des instructions de déplacement.

10. Procédé selon l'une quelconque des revendications 7 à 9, **caractérisé en ce que** le procédé est un procédé permettant la navigation autonome du véhicule portant une unité de tonte et/ou de fertilisation à l'intérieur des limites sur une surface engazonnée en tant que surface à traiter.

Fig. 1

Fig. 2

Fig. 3

Fig. 4

Initialisiere $p(z^c|x)$ ~21

Messung
Kamera / Rasensensoren ~22

Update $p(z^c|x)$ ~23

Bestimme $p(x_i|z_i^c)$ ~24

Klassifizierung ~25

Segmentierung /
Kantendetektion ~26

29~ Stellkommandos generieren

28~ Trajektorie planen

27~ Umrechnung
Bildkoordinaten

## Fig. 5

**Fig. 6**

**Fig. 7**

**IN DER BESCHREIBUNG AUFGEFÜHRTE DOKUMENTE**

**In der Beschreibung aufgeführte Patentdokumente**

- EP 1704766 A

**In der Beschreibung aufgeführte Nicht-Patentliteratur**

- **BIBER ; PETER ; DUCKETT ; TOM.** Dynamic Maps for Long-Term Operation of Mobile Service Robots. *Robotics: Science and Systems,* 2005

- **PEDRO F. FELZENSZWALB ; DANIEL P. HUT-TENLOCHER.** Efficient Belief Propagation for Early Vision. *International Journal of Computer Vision,* Oktober 2006, vol. 70 (1
- **BERND JÄHNE.** *Digitale Bildverarbeitung,* 2005